# EUROPÄISCHE PATENTSCHRIFT

(11) **EP 1 155 427 B1**
(45) Veröffentlichungstag und Bekanntmachung des Hinweises auf die Patenterteilung: **28.08.2002**
(21) Anmeldenummer: 00906342.1
(22) Anmeldetag: 18.02.2000
(51) Int. Cl.: H01H 27/00, B60R 25/04

(54) **VORRICHTUNG ZUR AUFNAHME UND HALTERUNG EINES IDENTIFIKATIONSGEBERS, WIE EINES ELEKTRONISCHEN SCHLÜSSELS, INSBESONDERE FÜR EINEN ZÜDANLASSSCHALTER**
DEVICE FOR RECEIVING AND HOLDING AN IDENTIFICATION PROVIDER, SUCH AS AN ELECTRONIC KEY, ESPECIALLY FOR AN IGNITION-STARTER SWITCH
DISPOSITIF POUR LA RECEPTION ET LE MAINTIEN D'UN DISPOSITIF D'IDENTIFICATION, TEL QU'UNE CLE ELECTRONIQUE, EN PARTICULIER POUR UN DEMARREUR A ALLUMAGE

(30) Priorität: 25.02.1999 DE 19908085
(43) Veröffentlichungstag der Anmeldung: 21.11.2001
(73) Patentinhaber: HUF HÜLSBECK & FÜRST GMBH & CO. KG, 42551 Velbert (DE)
(72) Erfinder: WITTWER, Reinhard, D-42579 Heiligenhaus (DE)
(74) Vertreter: Mentzel, Norbert, Dipl.-Phys.
(86) Internationale Anmeldenummer: EP0001315
(87) Internationale Veröffentlichungsnummer: WO00051149

(56) Entgegenhaltungen:
- DE-C- 19 751 805

## Beschreibung

Bei mechanischen Schlüsseln mit herkömmlichen Einschnitten und Zuhaltungen im zugehörigen Schließzylinder ist, nach dem Drehen des im Schließzylinder eingesteckten Schlüssels, der Schlüssel nicht mehr aus dem Schließzylinder herausziehbar. Nur in der Ausgangsdrehstellung des Schließzylinders lässt sich der Schlüssel ein- und ausstecken. Dieser Effekt ist erwünscht. Auf diesen Effekt soll auch bei elektronischen Schlüsseln, die eine Fernbedienung gestatten, nicht verzichtet werden.

Die Erfindung richtet sich auf eine Vorrichtung der im Oberbegriff des Anspruches 1 angegebenen Art, die mit einem elektronischen Identifikationsgeber zusammenwirkt. Diese Vorrichtung kann räumlich getrennt von einer Lenksäulenverriegelung und/oder einem Zündanlassschalter angeordnet sein, wirkt aber mit diesen Aggregaten über mechanische oder elektrische Verbindungen zusammen. Die Vorrichtung kann aber auch mit einem oder mit beiden dieser Aggregate kombiniert sein. Zu diesen Aggregaten kann es noch eine gesonderte Handhabe zum Start des Motorfahrzeugs geben, die mit der erfindungsgemäßen Vorrichtung, dem Zündanlassschalter und/oder der Lenksäulenverriegelung in Wirkverbindung steht.

Bei einem bekannten Zündanlassschalter (DE 198 36 968 A1), der mit einem elektronischen Schlüssel zusammenwirkt, wird als Abdeckelement für die Öffnung der Aufnahme im Gehäuse ein axial beweglicher Schieber mit einer Endplatte verwendet.

Der Schieber ist axial federbelastet und wird durch Endanschläge in einer Ausschublage gehalten, in welcher die Öffnung verschlossen ist. Die Aufnahme befindet sich in einem Rotor innerhalb des Gehäuses. Bei eingestecktem Schlüssel wird der Rotor aus einer vorgegebenen Ruheposition in verschiedene Arbeitspositionen überführt, in denen der Schlüssel nicht aus der Aufnahme wieder herausgezogen werden kann. Dazu dienen in Radialbohrungen des Rotors geführte Sperrstifte, die bei einer von der Ruheposition des Rotors abweichenden Verdrehung in diametrale Aussparungen am eingesteckten Schlüssel eingreifen und so den Schlüssel in der Einstecklage im Rotor sichern. Nur in der Ruheposition des Schlüssels lassen sich die Sperrstifte radial voneinander wegbewegen. Bei diesem Zündanlassschalter sind die Halteelemente für den Schlüssel einerseits und das Abdeckelement für die Öffnung der Aufnahme andererseits gesonderte Bauteile, die einzelweise hergestellt und montiert werden müssen. Das ist kostenaufwendig. Betriebsstörungen der gesondert wirkenden Elemente summieren sich.

Der Erfindung liegt die Aufgabe zugrunde, eine betriebssichere Vorrichtung der im Oberbegriff des Anspruches 1 angegebenen Art zu entwickeln, die kostensparend herstellbar ist. Dies wird erfindungsgemäß durch die im Kennzeichen des Anspruches 1 angegebenen Maßnahmen erreicht, denen folgende besondere Bedeutung zukommt.

Die Klappe ist durch eine Federkraft beaufschlagt. Bei abgezogenem elektronischen Schlüssel wird daher die Klappe in geschlossener Stellung gehalten. Beim Einstecken und Abziehen des Schlüssels erzeugt diese Federkraft einen Rasteffekt, der für einen Kraftschluss zwischen dem eingesteckten Schlüssel und dem Vorsprung an der Klappe sorgt. Beim Umsteuern der Steuerfläche in ihre wirksame Sperrstellung bezüglich der in ihrer Einschwenklage befindlichen Klappe entsteht ein Formschluss. Der Vorsprung an der Klappe greift dann in den seitlichen Einschnitt des elektronischen Schlüssels ein und sichert so dessen Einstecklage. Damit hat die Klappe bei der Erfindung eine doppelte Funktion. Sie ist zunächst ein Abdeckelement, welches bei entferntem Schlüssel die Öffnung der Aufnahme verschließt. Die zweite Funktion der Klappe ergibt sich, weil ihr Vorsprung zugleich als Halteelement für den Schlüssel wirkt. Man braucht nur dafür zu sorgen, dass die Klappe in jenen Arbeitspositionen des Schlüssels, die sein Herausziehen aus der Aufnahme verhindern sollen, nicht in ihre im Anspruch 1 erwähnte "Überschwenklage" weiterbewegt werden kann. Dafür sorgt die bereits erwähnte Steuerfläche, die in ihrer wirksamen Sperrstellung ein weiteres Verschwenken der Klappe in ihre Überschwenklage blockiert.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Es zeigen:
- Fig. 1: die erfindungsgemäße Vorrichtung im Längsschnitt und den zugehörigen, als Schlüssel ausgebildeten Identifikationsgeber vor dem Einstecken der Aufnahme,
- Fig. 2a: in einer der Fig. 1 entsprechenden Darstellung die Einstecklage des Schlüssels in der Aufnahme,
- Fig. 2b: eine Position beim Übergang zwischen Fig. 1 und 2a,
- Fig. 3a+3b: Querschnitte durch die Vorrichtung mit eingestecktem Schlüssel längs der versprungenen Schnittlinie IIIa - IIIa von Fig. 2a in zwei zueinander unterschiedlichen Drehpositionen des Schlüssels,
- Fig. 4,: in einer der Fig. 1 bzw. 2 entsprechenden Darstellung eine alternative Ausbildung der Vorrichtung,
- Fig. 5: einen Querschnitt durch das Schloss in Fig. 4 längs der Schnittlinie V - V,
- Fig. 6: in einer zu Fig. 4 analogen Darstellung ein drittes Ausführungsbeispiel der erfindungsgemäßen Vorrichtung,
- Fig. 7,: in schematischer Darstellung, die Anwendung eines vierten Ausführungsbeispiels der erfindungsgemäßen Vorrichtung als Schlüsselhalter in Verbindung mit einem elektrischen Zündanlassschalter und einer elektrischen Lenkschlossverriegelung für ein Motorfahrzeug,
- Fig. 8: einen Längsschnitt durch eine gemäß Fig. 7 gestaltete Vorrichtung vor dem Einstecken des Schlüssels,
- Fig. 9,: in Draufsicht, die Anordnung einiger Bauteile im Inneren der in Fig. 8 gezeigten Vorrichtung,
- Fig. 10a+10b: in einer der Fig. 8 entsprechenden Darstellung ein Teilstück der Vorrichtung bei eingesteckten, als Schlüssel ausgebildeten Identifikationsgeber in zwei unterschiedlichen Positionen eines sperrwirksamen Bauteils im Inneren der Vorrichtung,
- Fig. 11,: in Seitenansicht, einen in Form einer scheckkartenartigen Platte ausgebildeten Identifikationsgeber, der anstelle des im Ausführungsbeispiel von Fig. 7 bis 10b gezeigten elektrischen Schlüssels bei einer derartigen Vorrichtung verwendet werden kann,
- Fig. 12: eine Alternative der in den Fig. 8 bis 10b gezeigten Vorrichtung, und zwar in einer zu Fig. 9 analogen Draufsicht auf die wesentlichsten Bauteile, vor Einstecken des in Fig. 11 gezeigten andersartigen Identifikationsgebers, und
- Fig. 13: schematisch, in einem der Fig. 8 analogen Längsschnitt, ein Teilstück einer weiteren alternativ ausgebildeten Vorrichtung nach der Erfindung.

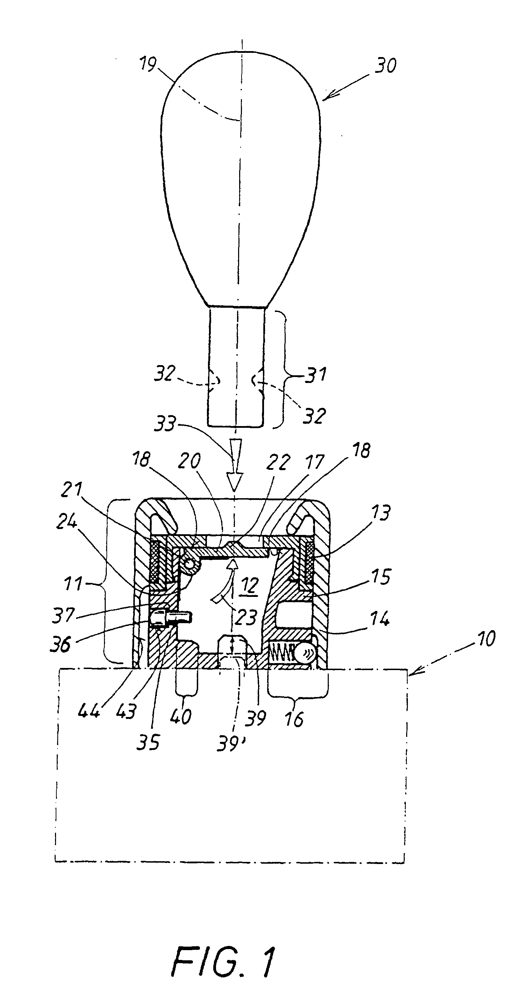

Im ersten Ausführungsbeispiel von Fig. 1 bis 3b ist eine Vorrichtung 10 gezeigt, wo das Vorrichtunggehäuse 11 eine Aufnahme 12 zum Einstecken eines Identifikationsgebers 30 besitzt. Der Identifikationsgeber ist hier als sogenannter "elektronischer Schlüssel" ausgebildet und wirkt mit einer Lenksäulenverriegelung und/oder einem Zündanlassschalter auf elektronischem Wege zusammen. Dazu kann z.B. eine im Gehäuse vorgesehene Transponderspule 13 dienen, die auf elektromagnetischem Wege die im Schlüssel 30 elektronisch gespeicherten Daten ermittelt.

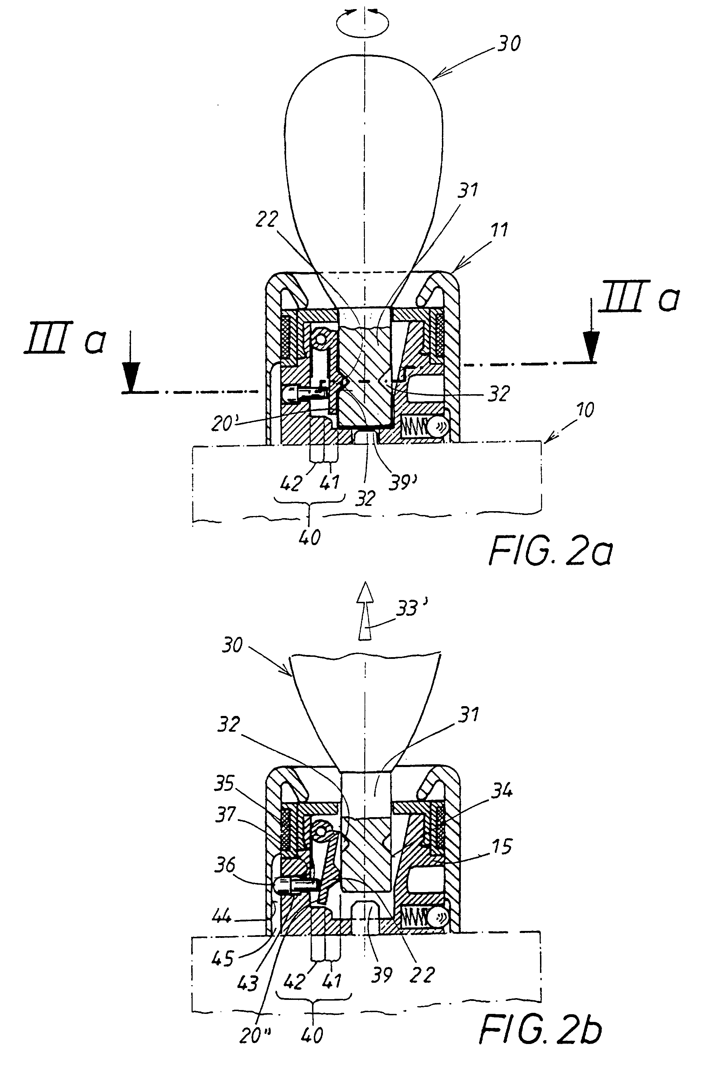

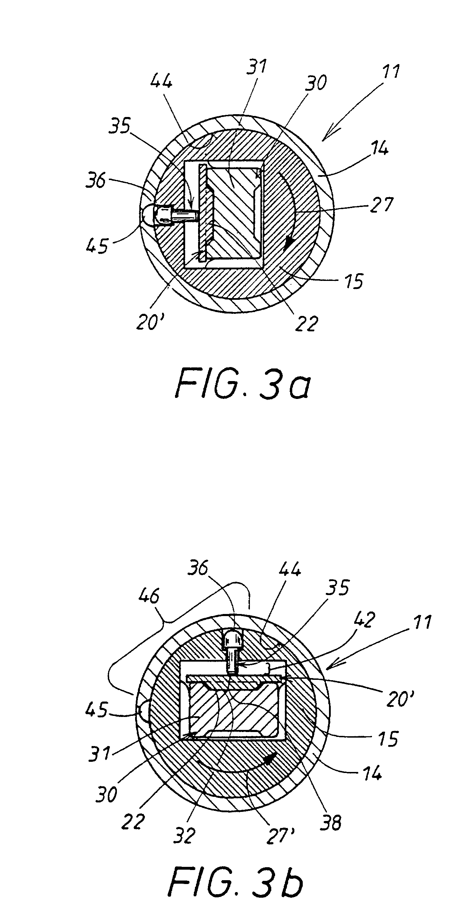

Im Ausführungsbeispiel von Fig. 1 bis 3b beinhaltet das Gehäuse 11 einen Rotor 15 und einen Stator 14. Der Stator besteht hier aus einem zylindrischen Gehäusemantel. Zwischen dem Stator 14 und dem Rotor 15 sind außer nicht näher gezeigten Drehanschlägen, die in Fig. 1 erkennbaren Rastelemente 16 vorgesehen, die den Rotor 15 in bestimmte Drehpositionen mit einer definierten Haltekraft festhalten können. Zwei dieser Drehpositionen sind in Fig. 3a und 3b gezeigt. Fig. 3a zeigt die Ruheposition des Rotors 15, wo das Ein- und Ausstecken eines am Schlüssel 30 vorgesehenen Schafts 31 möglich ist. In den Zeichnungen gemäß Fig. 2 bis 3b ist der innere Aufbau im Schaft 31 nicht dargestellt, sondern nur durch Schraffur angedeutet. Der Schaft 31 des Schlüssels 30 besitzt mindestens einen seitlichen Einschnitt 32, der zwar auch als Loch oder als Ausnehmung auf der Breitseite des Schlüssels ausgebildet sein kann, aber nachfolgend stets "Einschnitt" genannt werden soll. Im vorliegenden Fall soll der Schlüssel 30 als ein sogenannter "Wendeschlüssel" benutzt werden können, weshalb der Schaft 31, wie Fig. 1 zeigt, zwei übereinstimmende, diametrale Einschnitte 32 aufweist.

Die Aufnahme 12 befindet sich im Rotor 15. Bei abgezogenem Schlüssel 30, gemäß Fig. 1, wird die Öffnung 17 der Aufnahme 12 von einer Klappe 20 ver Vorrichtungen. Diese Schwenklage von Fig. 1 soll nachfolgend kurz "Ausschwenklage" bezeichnet werden. Die Aufnahme 12 ist mit einer seitlichen Aussparung 40 für die Klappe 20 versehen. Dieser aus der eigentlichen Aufnahme 12 und der Aussparung 40 bestehende Raum ist gegenüber der lichten Weite der Öffnung 17 verengt. Dadurch entstehen Innenschultern 18 für die Klappe 20, welche einerseits als Endanschlag für die in Fig. 1 gezeigte Ausschwenklage der Klappe 20 fungieren und andererseits zur abgedeckten Anordnung der Schwenkachse 21 der Klappe 20 dienen. Die Klappe 20 steht unter der Wirkung einer durch den Pfeil 23 in Fig. 1 verdeutlichten Federkraft. Diese Federkraft 23 geht hier von einer auf der Schwenkachse 21 angeordneten zweischenkeligen Wendelfeder 24 aus. Diese Wendelfeder 24 ist bestrebt die Klappe 20 in ihrer Ausschwenklage von Fig. 1 zu halten.

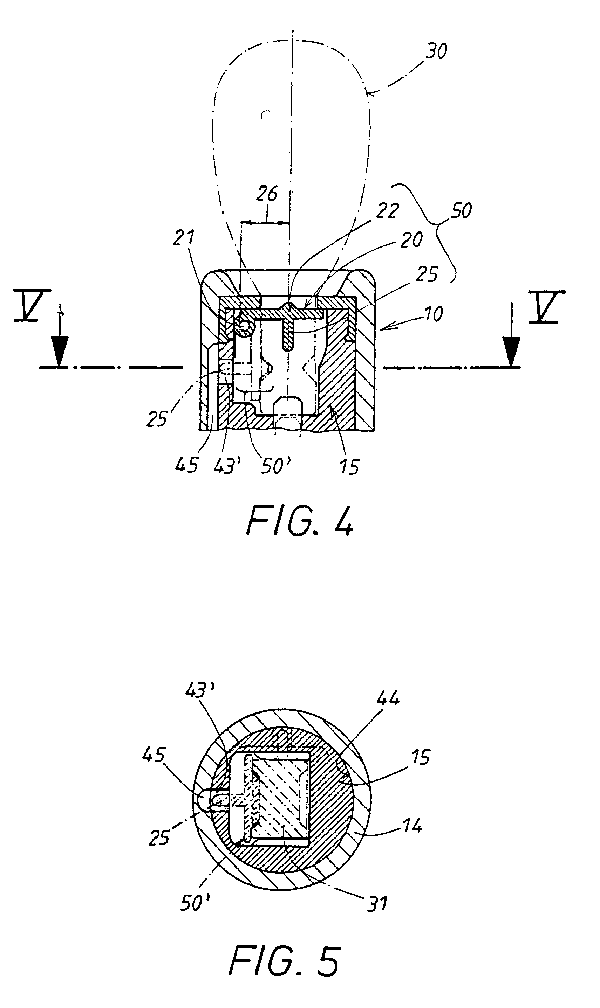

Die Schauseite der Klappe 20 ist mit einem Vorsprung 22 versehen, der ein dem vorerwähnten seitlichen Einschnitt 32 des Schlüssels 30 angepasstes, komplementäres Profil aufweist. Der Vorsprung 22 ist, wie anhand des zweiten, in Fig. 4 gezeigten Ausführungsbeispiels verdeutlicht ist, in radialem Abstand 26 bezüglich der Schwenkachse 21 angeordnet und liegt, gemäß Fig. 1, in der Längsmitte der Öffnung 17, etwa in Ausrichtung mit der strichpunktiert in Fig. 1 angedeuteten Achse der Vorrichtung. Die Achse 19 ist auch die Rotationsachse des beschriebenen Rotors 15.

Beim Einstecken des Schlüssels 30 im Sinne des Pfeils 33 von Fig. 1 wird die Klappe 20, gegen ihre Federbelastung 23 ins Innere der Aufnahme 12 verschwenkt und kommt, bei voll eingestecktem Schlüssel 30 gemäß Fig. 2a, in die dort ersichtliche Lage 20', die nachfolgend kurz "Einschwenklage" bezeichnet werden soll. In dieser Einschwenklage 20' nimmt die Klappe nur einen mit 41 gekennzeichneten ersten Bereich der Aussparung 40 ein. Dabei greift der Klappen-Vorsprung 22 in eine der beiden Einschnitten 32 des Schlüssels 30 ein. Während des Einsteckens 33 muss, wie aus Fig. 2b zu entnehmen ist, die Klappe in die dort mit 20" gekennzeichnete Lage weiter zurückgeschwenkt werden, damit der Vorsprung 22 über die eine größere Breite aufweisende Umrisskontur 34 des Schlüsselschafts 31 gleiten kann. Wie aus Fig. 2b zu erkennen ist, muss dazu die Klappe 30 über den ersten Raumbereich 41 der Aussparung 40 hinaus in den angrenzenden zweiten Bereich 42 zurückgeschwenkt werden. Diese weiter zurückgeschwenkte Lage 22' der Klappe von Fig. 2b soll nachfolgend "Überschwenklage" genannt werden.

Wie aus Fig. 2b weiter zu ersehen ist, setzt sich die Aussparung 40 im Rotor 15 in einer radialen Bohrung 43 des Rotors fort bis zu einer profilierten Innenfläche 44 des erwähnten Gehäusemantels 14. In dieser Bohrung 43 befindet sich ein Steuerglied 35, welches in diesem Ausführungsbeispiel aus einem losen Steuerstift 35 besteht, der mit seinem radialen Außenende 36 der Innenfläche 44 zugekehrt ist. Dieses Außenende 36 ist ballig ausgebildet. Die Bohrung 43 ist gestuft, wie auch der Steuerstift mit einem verdickten Kopf versehen ist, wodurch die in Fig. 2b mit 37 gekennzeichneten, zusammenwirkenden Endanschläge ergeben. Durch die Endanschläge 37 wird der Steuerstift 35 in einer definierten, in Fig. 2a erkennbaren Axiallage gehalten, wo sein radiales Innenende 38 in den vorerwähnten zweiten Bereich der Aussparung 40 hineinragt. Zweckmäßigerweise befindet sich das Steuerstift-Innenende 38 an der Grenze zu dem ersten Raumbereich 41 der Aussparung 40. Wie Fig. 2a zeigt ist der für die Einschwenklage 20' der Klappe erforderliche Raumbereich 41 begrenzt. Die jeweilige Axiallage des Steuerstifts 35 wird durch das besondere Profil der bereits erwähnten Innenfläche 44 vom Gehäusemantel 14 bestimmt, die sich dadurch als "Steuerfläche" für diesen Stift 35 erweist.

Wie bereits erwähnt wurde, kann der Rotor 15 durch den eingesteckten Schlüssel 30 aus seiner in Fig. 3a gezeigten Ruheposition in wenigstens eine weitere Arbeitsposition gemäß Fig. 3b im Sinne des Pfeils 27 verdreht werden. Dabei wird die in ihrer Einschwenklage 20' befindliche Klappe und der Steuerstift 35 mitgenommen. Das erwähnte Profil der Steuerfläche 44 vom Gehäusemantel 14 besteht aus einer Radialvertiefung 45, die in der Ruheposition von Fig. 3a mit dem Außenende 36 des Steuerstifts 35 ausgerichtet ist. Die angrenzenden Bereiche der Steuerfläche 44 werden von der unverändert gebliebenen Hohlzylinderfläche 46 des Gehäusemantels 14 gebildet und wirken daher wie eine "Radialerhebung". In der Arbeitsposition von Fig. 3b ist der Steuerstift 35 mit seinem Außenende 36 vor diese Radialerhebung 46 gelangt und wird daher in der beschriebenen, den Raumbereich 42 durchragenden Stellung gesperrt. Das radiale Innenende 38 des Steuerstifts 35 stützt sich an der in ihrer Einschwenklage 20' befindlichen Klappe ab und verhindert ihre weitere Schwenkbewegung bis zu der Überschwenklage 20" von Fig. 2b. Dadurch ist der Eingriff des Vorsprungs 22 der eingeschwenkten Klappe 20' in der Einschnitt 32 vom Schlüsselschaft 31 sichergestellt. Der Hohlzylinderbereich 46 der Steuerfläche 44 erzeugt somit eine wirksame "Sperrstellung" für den Steuerstift 35, der die Klappe in ihrer Einschwenklage 20' blockiert.

Der Schlüssel 30 lässt sich nur dann wieder aus der Vorrichtung 10 herausziehen, wenn er im Sinne des Gegenpfeils 27' soweit wieder zurückgedreht worden ist, dass sich der Rotor 15 in seiner Ruheposition von Fig. 3a befindet. Dann ist das radiale Außenende 36 des Steuerstifts 35 mit der hier als Innennut 45 ausgebildeten Radialvertiefung der Steuerfläche 44 ausgerichtet. Beim Herausziehen des Schlüssels 30 im Sinne des Pfeils 33' von Fig. 2b wird der Vorsprung 22 durch die schrägen Auflaufflächen des Einschnittes 32 radial weggedrückt. Die Klappe gelangt dann in ihre Überschwenklage 20". Der Steuerstift 35 wird mit seinem Außenende 36 in die Innennut 45 verschoben. Dann kann der Vorsprung 22 der weitergeschwenkten Klappe 20" an der Umrisskontur 34 des Schlüsselschafts 31 entlanggleiten. In der Ruhestellung des Rotors 15 befindet sich somit der Steuerstift in seiner "Freigabestellung". Diese Freigabestellung gestattet eine Radialverschiebung des Steuerstifts 35 gemäß Fig. 1 und Fig. 2b.

Zweckmäßigerweise ist die Vorrichtung 10 noch mit einem Sensor 39 versehen, der die volle Einstecklage des Schlüsselschafts 31 in der Aufnahme 12 überwacht. Dieser kann z.B. aus einem axial verschieblichen Schiebeglied 39 bestehen, der durch eine Bodenöffnung in die Aufnahme 12 hineinragt und im Sinne des in Fig. 1 angedeuteten Doppelpfeils vom Stirnende des Schlüsselschafts 31 aus einer dortigen, ausgezogen gezeichneten "Key-out"-Position in die dort gestrichelt angedeutete "Key-in"-Position zurückgedrückt wird. Dies ist in Fig. 2a verwirklicht.

Das in den Fig. 4 und 5 gezeigte zweite Ausführungsbeispiel der Vorrichtung 10 hat weitgehend den gleichen Aufbau wie das in den Fig. 1 bis 3b gezeigte Schloss des ersten Ausführungsbeispiels. Es gilt daher insoweit die gleiche Beschreibung. Es genügt lediglich auf die Unterschiede einzugehen.

Der Unterschied der Vorrichtung 10 des zweiten Ausführungsbeispiels von Fig. 4 und 5 besteht vor allem darin, dass anstelle eines separaten, losen Steuerstifts 35 die dortige Klappe 20 mit einem auf ihrer Rückseite angeformten Steuerstift 25 versehen ist. In diesem Fall liegt eine klappbewegliche Baueinheit 50 aus der Klappe 20, dem Vorsprung 22 und dem Steuerstift 25 vor. In Fig. 4 und 5 ist strichpunktiert auch die Einschwenklage 50' der Baueinheit gezeigt. In diesem Fall ragt das radiale Außenende des Steuerstifts 25 in einen Radialdurchbruch 43' vom Rotor 15 ein und steht dann in Ausrichtung mit einer Innennut 45 der auch hier vorliegenden Steuerfläche 44 im Inneren des Gehäusemantels 14, wenn die in den Fig. 4 und 5 gezeigte Ruheposition des Rotors 15 vorliegt.

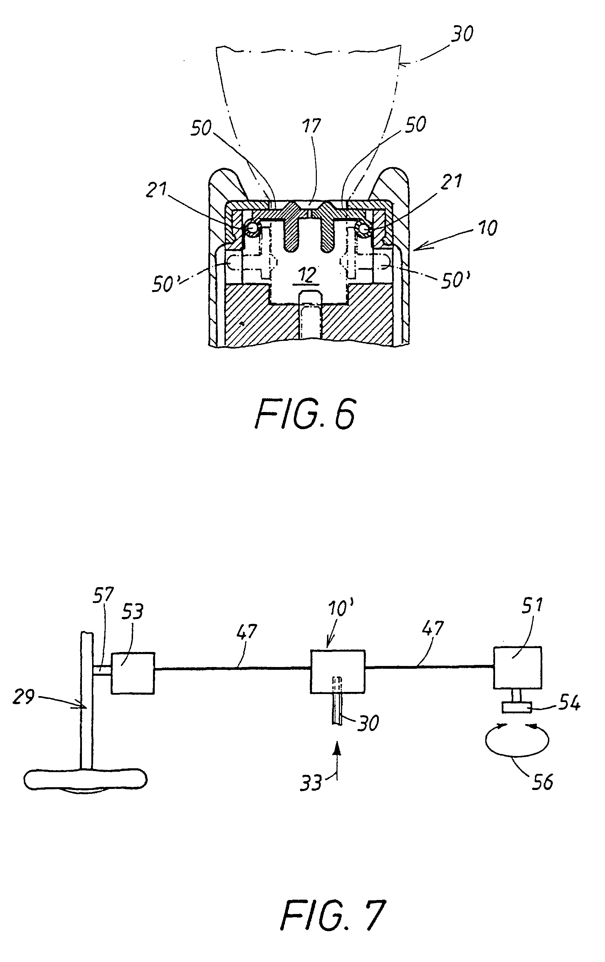

Die Fig. 6 zeigt eine Abwandlung des in den Fig. 4 und 5 gezeigten Vorrichtung. Der Unterschied in Fig. 6 besteht darin, dass dort zwei der vorerwähnten Baueinheiten 50 vorgesehen sind, die in ihrer ausgezogen gezeichneten Ausschwenklage jeweils eine Hälfte der Öffnung 17 zur Aufnahme 12 abdecken. Die beiden Baueinheiten 50 haben voneinander getrennte Schwenkachsen 21 und werden durch Einstecken des elektronischen Schlüssels 30 in zueinander spiegelbildlicher Weise verschwenkt. Sie gelangen in die beiden strichpunktiert in Fig. 6 verdeutlichten Einschwenklagen 50'.

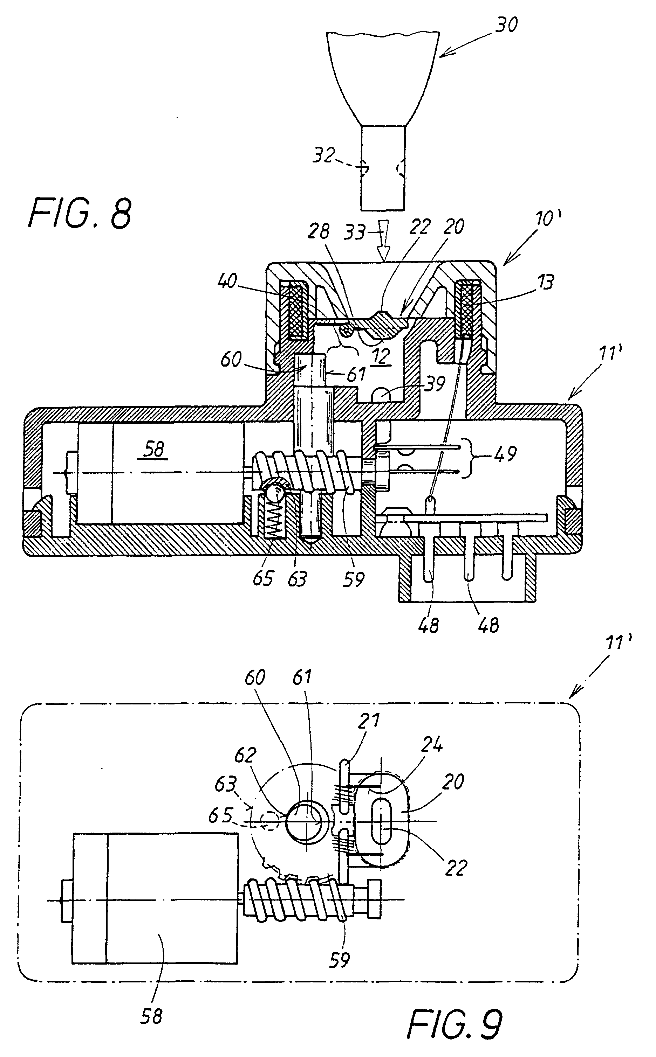

In den Fig. 8 bis 10b ist ein als "Schlüsselhalter" ausgebildete Vorrichtung 10' gezeigt, die zwar auch mit einer Klappe 20 im Bereich der Gehäuse-Aufnahme 12 versehen ist, doch ist diese Aufnahme 12 stationär und nicht Bestandteil eines Rotors. Der Schlüsselhalter 10' kann in der aus Fig. 7 ersichtlichen Weise mit weiteren Aggregaten 51, 53 zusammenwirken. Obwohl auch mechanische Verbindungen bestehen könnten, werden im vorliegenden Fall elektrische Verbindungen 47 zwischen diesen Aggregaten 10' 51, 53 benutzt. Dazu sind im zugehörigen Gehäuse 11' gemäß Fig. 8 Anschlusskontakte 48 vorgesehen.

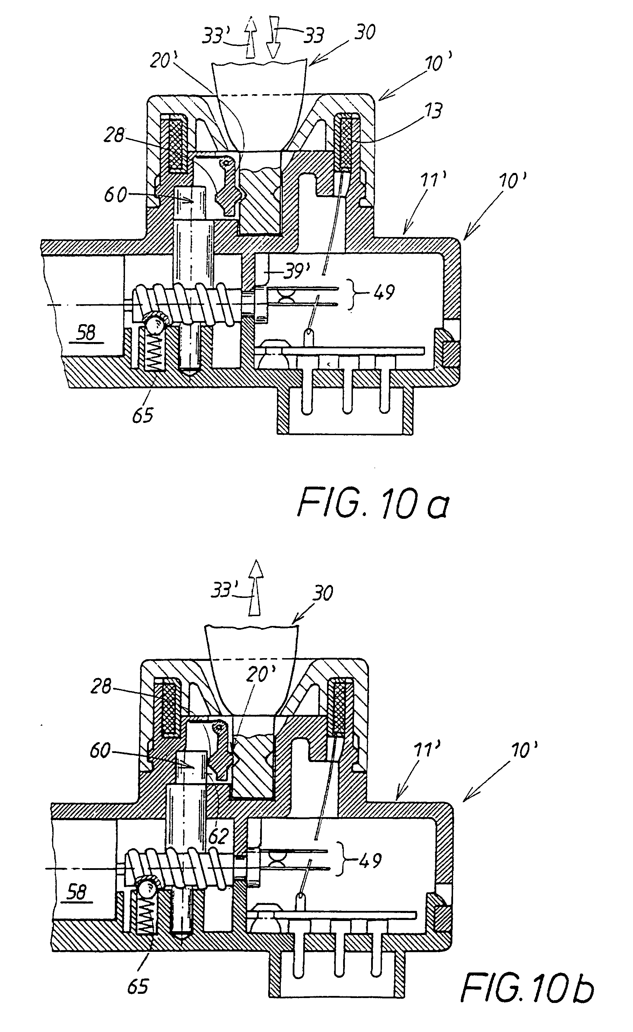

Das erste Aggregat 51 von Fig. 7 besteht aus einem elektrischen Zündanlassschalter, der eine Handhabe 54 besitzt. Die Handhabe 54 dient zum Starten eines nicht näher gezeigten Motors vom Kraftfahrzeug. Dazu kann die Handhabe z.B. als Drehknopf ausgebildet sein, die im Sinne des in Fig. 7 eingezeichneten Drehbetätigungspfeils 56 gehandhabt wird. Die richtige Einstecklage des Schlüssels 30 wird von einem Key-in-Kontakt 49 überwacht, dessen einer Kontaktschenkel z.B. durch das bereits im vorausgehenden Ausführungsbeispiel beschriebenen axial beweglichen Schiebeglieds 39 gesteuert wird. Vor dem Einstecken des Schlüssels 30 ist der Kontakt 49 gemäß Fig. 8 geöffnet. Der voll eingesteckte Schlüssel gemäß Fig. 10a und 10b drückt das Schiebeglied in die Position 39' die den Kontakt 49 schließt. Dann kann es auf elektrischem oder magnetischem Weg zu einer Identifizierung zwischen dem Schlüssel 30 und dem Schlüsselhalter 10' kommen, was z.B. wieder über eine in Fig. 8 erkennbare Transponderspule 13 geschehen kann.

Beim Einstecken des Schlüssels 30 wird auch in diesem Fall die Klappe aus ihrer in Fig. 8 erkennbaren Ausschwenklage 20 in die Einschwenklage 20' zurückgeschwenkt, wobei es wieder zu einem Eingriff des klappenseitigen Vorsprungs 22 mit dem schlüsselseitigen Einschnitt 32 kommt. Beim Ein- und Auskuppeln des Schlüssels 30 wird die Klappe 20 auch in die im Zusammenhang mit dem ersten Ausführungsbeispiel beschriebene Überschwenklage gemäß Fig. 2b kurzzeitig gebracht. Insoweit gilt die bisherige Beschreibung.

Der Schlüsselhalter 10' ist über die mechanische und/oder elektrische Verbindung 57 mit einer elektrischen Lenkschlossverriegelung 53 verbunden. Diese Verriegelung 53 verriegelt über ein Riegelglied 57 eine Lenksäule 29 gemäß Fig. 7 dann, wenn der Schlüssel 30 nicht im Sinne des Pfeils 33 in das Schloss 10' eingesteckt worden ist. Der Zündanlassschalter 51 und die Lenkschlossverriegelung 53 können baueinheitlich miteinander verbunden sein.

Ein weiterer Unterschied des Schlüsselhalters 10' von Fig. 8 bis 10b gegenüber den vorausgehenden Varianten 10 des Schlosses gemäß Fig. 1 bis 6 besteht darin, dass die Steuerfläche aus der Steuerkurve 61, 62 eines rotationsangetriebenen Exzenters 60 besteht. Wie besonders gut aus Fig. 9 zu erkennen ist, dient zum Antrieb des Exzenters 60 ein im Gehäuse 11' angeordneter Elektromotor 58, der über eine Schnecke 59 ein drehfest mit dem Exzenter 60 verbundenes Schneckenrad 63 antreibt. Die Steuerkurve am Exzenter 60 umfasst einen radial zurückgesetzten Kurvenabschnitt 61 und einen radial vorspringenden Kurvenabschnitt 62, der dem zurückgesetzten Abschnitt 61 diametral gegenüberliegt. Normalerweise befindet sich der Exzenter 60 in der aus Fig. 8 bis 10a ersichtlichen Drehstellung, wo der zurückgesetzte Kurvenabschnitt 61 gegen die Höhlung 40 neben der Aufnahme 12 weist. Dann befindet sich der Exzenter 60 in seiner Freigabestellung gegenüber der in Fig. 10a erkennbaren Einschwenklage 20' der Klappe. Dann sind, wie schon im Zusammenhang mit der Vorrichtung 10 beschrieben wurde, ein Einstecken 33 und wieder Herausziehen 33' des Schlüssels 30 aus dem Schloss 10' ohne weiteres möglich.

Ohne Schlüssel ist der Startbetätiger 51 von Fig. 7 unwirksam; der Motor des Fahrzeugs kann nicht arbeiten. Ist der ordnungsgemäße Schlüssel im Schlüsselhalter 10' eingesteckt, so ist eine Betätigung der Handhabe 54 vom Zündanlassschalter 51 erfolgreich. Gesteuert wird dies durch eine Auswerteelektronik für den Schlüsselcode. Dabei werden nicht nur die erwähnten weiteren Aggregate 51, 53 in der erforderlichen Weise angesteuert, sondern auch der Schrittmotor 58 in einem definierten Ausmaß angetrieben. Dadurch wird der Exzenter 60 soweit verdreht, bis sein radial vorspringender Kurvenabschnitt 62 vor einen Steuernocken 28 der in ihrer Einschwenklage 20' befindlichen Klappe fährt. Dann stoppt der Elektromotor 58 automatisch. In dieser Rotationsposition des Exzenters 60 wird die eingeschwenkte Klappe 20' über ihren sich dort abstützenden Steuernocken 28 am Schlüssel 30 festgeklemmt. Es liegt dann die wirksame Sperrstellung des Exzenters 60 gemäß Fig. 10b vor. Solange der Kraftfahrzeugmotor in Betrieb ist, ist ein Abzug des Schlüssels im Sinne des Pfeils 33' gesperrt. Erst wenn der Kraftfahrzeugmotor ausgestellt wird, ist der Schlüsselabzug freigegeben. Danach erfolgt eine Verriegelung der Lenksäule 29 durch das Aggegrat 53. Um den Exzenter 60 in der Blockadeposition von Fig. 10b oder in der Freigabeposition von Fig. 10a zu halten, kann ein Rastelement 65, z.B. in Form einer Kugelraste, vorgesehen sein, das mit entsprechenden Rastvertiefungen an der unteren Stirnfläche des Schneckenrads 63 zusammenwirkt.

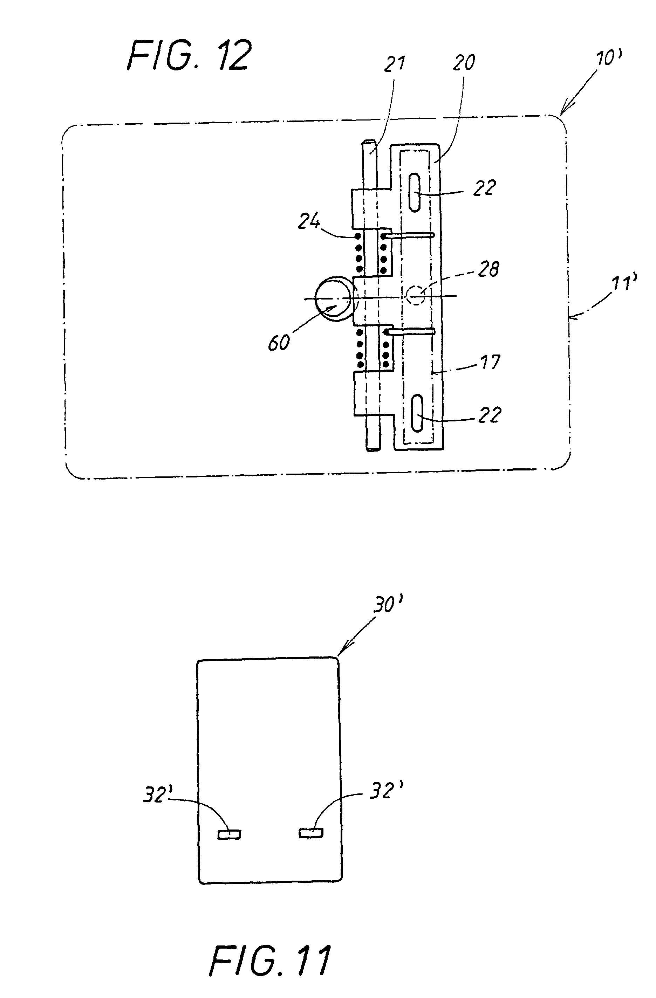

In Fig. 11 und 12 ist eine abgewandelte Ausführung des Schlüsselhalters 10' gezeigt. Zur Benennung der Bauteile werden die bisherigen Bezugszeichen verwendet, weshalb insoweit die bisherige Beschreibung gilt. Es genügt lediglich auf die Unterschiede einzugehen.

Ein Unterschied besteht darin, dass, anstelle des vorbeschriebenen Fernbedienungs-Schlüssels 30, ein plattenförmig ausgebildeter Identifikationsgeber 30' verwendet wird, der z.B. das Format einer sogenannten Scheckkarte hat. Wegen dieses Formats sind zweckmäßigerweise mehrere Ausnehmungen 32' im Identifikationsgeber 30' vorgesehen. Weil auch diese Scheckkarte 30' in gewendeter Form im Schlüsselhalter 10' verwendet werden soll, sind auf beiden Flächenseiten der Scheckkarte 30' jeweils zwei Ausnehmungen 32' vorgesehen. Das in Fig. 12 angedeutete Gehäuse 11' besitzt eine dem Plattenformat der Scheckkarte 30' angepasste Öffnung 17, die in der Ausschwenklage der Klappe 20 verschlossen wird. Die Klappe 20 besitzt auf ihrer Schauseite den beiden Ausnehmungen 32' zugeordnete doppelte Vorsprünge 22, während rückseitig ein etwa in der Plattenmitte befindlicher Steuernocken 28 angeordnet ist. In Abhängigkeit von der Betätigung eines Startknopfs od. dgl. wird auch in diesem Fall bei einer im Schlüsselhalter 10' steckenden Scheckkarte 30' der Exzenter 60 zwischen seinen beiden bereits beschriebenen wirksamen und unwirksamen Stellungen umgesteuert, in Analogie zu Fig. 10a und 10b.

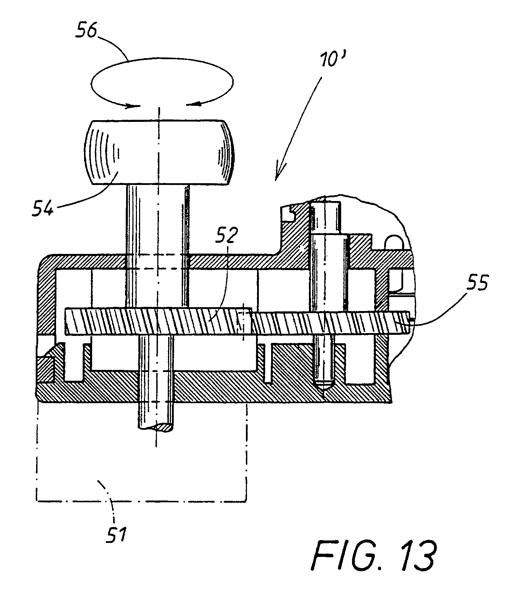

Die Fig. 13 zeigt ein Teilstück eines gegenüber Fig. 8 abgewandelt ausgebildeten Schlüsselhalters 10'. Es sind lediglich die geänderten Mittel zur Umsteuerung des Exzenters 60 gezeigt. Die bereits im Zusammenhang mit Fig. 7 erwähnte Drehhandhabe 54, die auch hier auf einen Zündanlassschalter 51 einwirkt, ist über ein Getriebe 52, 55 mit dem Exzenter 60 verbunden. Die Drehhandhabe 54 ist drehfest mit einem Zahnrad 52 verbunden, der mit einem Zahnrad 55 in Eingriff steht. Dieses Zahnrad 55 ist seinerseits drehfest mit dem Exzenter 60 verbunden. Eine Drehbetätigung im Sinne des Pfeils 56 wirkt sich dann in der beschriebenen Umsteuerung des Exzenters 60 mit seinen aus Fig. 9 ersichtlichen Kurvenabschnitten 61, 62 aus.

### Bezugszeichenliste:

- 10: Vorrichtung
- 10': Schlüsselhalter, Vorrichtung
- 11: Gehäuse von 10
- 11': Gehäuse von 10'
- 12: Aufnahme in 15 bzw. 11'
- 13: Transponderspule
- 14: Stator, zylindrischer Gehäusemantel
- 15: Rotor
- 16: Rastelement zwischen 14, 15
- 17: Öffnung von 12
- 18: Innenschulter von 15
- 19: Achse der Vorrichtung, Rotationsachse von 15
- 20: Klappe (in Ausschwenklage)
- 20': Einschwenklage von 20
- 20": Überschwenklage von 20
- 21: Schwenkachse von 20
- 22: Vorsprung an 20
- 23: Federbelastung, Kraftpfeil
- 24: Wendelfeder für 23
- 25: angeformter Steuerstift an 20 (Fig. 4, 5)
- 26: radialer Abstand zwischen 22, 21 (Fig. 4)
- 27: Drehpfeil von 15
- 27': Gegendrehpfeil von 15
- 28: Steuernocken an 20 (Fig. 8)
- 29: Lenksäule (Fig. 7)
- 30: Identifikationsgeber, elektrischer Schlüssel
- 30': Identifikationsgeber, Scheckkarte
- 31: Schlüsselschaft von 30
- 32: seitlicher Einschnitt in 30
- 32': Ausnehmung von 30' (Fig. 11)
- 33: Einsteckpfeil für 30
- 33': Herausziehpfeil von 30
- 34: Umrisskontur von 31
- 35: Steuerglied, loser Steuerstift (Fig. 1)
- 36: radiales Außenende von 35
- 37: axialer Endanschlag für 35
- 38: radiales Innenende von 35
- 39: Sensor für 30, axial bewegliches Schiebeglied ("Key-out"-Position)
- 39': "Key-in"-Position von 39
- 40: Aussparung in 12
- 41: erster Raumbereich von 40 für 20'
- 42: zweiter Raumbereich von 40 für 20"
- 43: Bohrung in 15
- 43': Radialdurchbruch in 15 (Fig. 4, 5)
- 44: Steuerfläche für 35 bzw. 25, Innenfläche von 15
- 45: Radialvertiefung in 44, Innennut
- 46: Radialerhebung von 44, Hohlzylinderfläche
- 47: elektrische Verbindungen bei 50' (Fig. 7)
- 48: Anschlusskontakt in 50'
- 49: Key-in-Kontakt
- 50: Baueinheit aus 22, 25, 35 (in Ausschwenklage)
- 50': Einschwenklage von 50
- 51: erstes Aggregat, Zündanlassschalter (Fig. 7)
- 52: Getriebe, Zahnrad von 54
- 53: drittes Aggregat, elektrische Lenkschlossverriegelung (Fig. 7)
- 54: Handhabe von 51, Drehknopf
- 55: Getriebe, Zahnrad von 55
- 56: Drehbetätigungspfeil von 54
- 57: Riegelglied an 53
- 58: Elektromotor in 11'
- 59: Schnecke an 58
- 60: Exzenter
- 61: Steuerkurve von 60, radial zurückgesetzter Kurvenabschnitt
- 62: Steuerkurve von 60, radial vorspringender Kurvenabschnitt
- 63: Schneckenrad

- 65: Kugelraste für 63

## Patentansprüche

1. Vorrichtung (10; 10') zur Aufnahme und zur Halterung eines Identifikationsgebers (30; 30'), wie eines elektronischen Schlüssels (30), insbesondere für einen Zündanlassschalter und/oder eine Lenksäulenverriegelung eines Motorfahrzeugs,
mit einem im Fahrzeug ortsfesten Gehäuse (11; 11'), das wenigstens einen Funktionsausgang aufweist, wie eine Steuerwelle für den Zündanlassschalter oder eine elektrische Leitung (47) zu einem Zündanlassschalter (52), und das Gehäuse eine Aufnahme (12) zum Einstecken des Identifikationsgebers (30; 30') besitzt,
wobei der Identifikationsgeber (30; 30') wenigstens einen seitlichen Einschnitt (32; 32') für ein in der Aufnahme (12) vorgesehenes Halteelement aufweist
und die zur Aufnahme (12) gehörende Öffnung (17) im Gehäuse (11, 11') mittels eines gefederten Abdeckelements verschlossen ist, welches beim Einstecken (33) des Identifikationsgebers (30; 30'), gegen die Federkraft (23), zurückgedrückt wird,
**dadurch gekennzeichnet ,**
**dass** das Abdeckelement eine schwenkbar gelagerte Klappe (20) ist, die aus ihrer die Öffnung (17) verschließenden Ausschwenklage (20) mittels des Identifikationsgebers (30; 30') in eine die Öffnung freigebende Einschwenklage (20') im Inneren der Aufnahme (12) verschwenkbar ist,
**dass** die Klappe (20) auf ihrer Schauseite einen Vorsprung (22) aufweist, der - in der Einschwenklage (20') - in den seitlichen Einschnitt (32) des Identifikationsgebers (30; 30') passt und als Halteelement für den Identifikationsgeber (30; 30') fungiert,
**dass** die Aufnahme (12) einen seitlichen Einschnitt (40) aufweist,
**dass** die Klappe (20) beim Ein- und Ausstecken (33; 33') des Identifikationsgebers (30; 30') durch Auflauf des Vorsprungs (22) auf die Kontur (34) des Identifikationsgeber (30; 30') aus ihrer Einschwenklage (20') zeitweise in eine Überschwenklage (20") weiter rückschwenkbar ist,
und **dass** eine Steuerfläche (44; 60) bezüglich der in der Einschwenklage (20') befindlichen Klappe zwischen einer Freigabestellung (45; 61) und einer Sperrstellung (46; 62) umsteuerbar ist,
wobei der zum Weiterschwenken der Klappe (20) in ihre Überschwenklage (20") erforderlicher Raumbereich (42) in der Freigabestellung (45; 61) der Steuerfläche (44; 60) zwar frei, aber in der Sperrstellung (46; 62) versperrt ist und dadurch den Eingriff des Vorsprungs (22) der Klappe in der Einschnitt (32; 32') des Identifikationsgebers (30; 30') sichert.

2. Vorrichtung nach Anspruch 1, **dadurch gekennzeichnet. dass** das Gehäuse (11) einen Rotor (15) beinhaltet, der sowohl die Aufnahme (12) als auch die Klappe (20) aufweist,
dass der Rotor (15) in einem stationären Gehäusemantel (14) vom Identifikationsgeber (30) aus einer Ruheposition in wenigstens eine weitere Arbeitsposition verdrehbar ist,
dass die Steuerfläche (44) sich auf der Innenfläche des Gehäusemantels (14) befindet, und mit einem Steuerglied (35; 25) zusammenwirkt und - bezüglich des Steuerglieds (35; 25) - im Bereich der Ruheposition eine Radialvertiefung (45) und im Bereich der Arbeitsposition eine Radialerhöhung (46) aufweist,
und dass das Steuerglied (35; 25) eine Bohrung (43; 43') im Rotor (15) durchragt, an der in der Aufnahme (12) befindlichen Klappe (20) angreift und die Klappe (20) - in Abhängigkeit von der Drehposition des Identifikationsgebers (30) - entweder die Klappe in ihrer Einschwenklage (20') sperrt oder ihre Weiterschwenkung bis zur Überschwenklage (20") freigibt.

3. Vorrichtung nach Anspruch 2, **dadurch gekennzeichnet, dass** das Steuerglied (35) zwischen axialen Endanschlägen (37) lose in der Bohrung (43) des Rotors (15) geführt ist
und dass das Steuerglied (30) - bei Ausrichtung seines radialen Außenendes (36) mit der Radialerhöhung (46) im Gehäusemantel (14) - mit seinem freien radialen Innenende (38) in jenen Raumbereich (42) der Aussparung (40) hineinragt, der für die Überschwenklage (20") der Klappe benötigt wird.

4. Vorrichtung nach Anspruch 2, **dadurch gekennzeichnet, dass** das Steuerglied (25) auf der Rückseite der Klappe (20) sitzt und das Steuerglied (25) zusammen mit dem Vorsprung (22) und der Klappe (20) eine gemeinsam klappbewegliche Baueinheit (50) bildet,
und dass - in der Einschwenklage (50') der Baueinheit - das Radial-Außenende (36) des Steuerglieds (25) in einem Radialdurchbruch (43') des Rotors (15) eingeschwenkt ist und mit der Radialvertiefung (45) bzw. Radialerhebung (46) am Gehäusemantel (14) zusammenwirkt.

5. Vorrichtung nach Anspruch 1, 3 oder 4, **dadurch gekennzeichnet, dass** die Aufnahme (12) im Gehäuse (11') zwar stationär ist, aber die Steuerfläche aus der Steuerkurve (61, 62) eines rotationsangetriebenen Exzenters (60) besteht,
dass der Antrieb (58) des Exzenters (60) mittels einer weiteren Handhabe (54) steuerbar ist und den Exzenter (60) in wenigstens zwei definierte Rotationsstellungen überführt,
dass der Exzenter neben der für die Klappe (20) bestimmten Aussparung (40) im Gehäuse (11') angeordnet ist und sowohl einen radial vorspringenden (62) als auch einen radial zurückgesetzten Kurvenabschnitt (61) aufweist
und dass - in Abhängigkeit von der Betätigung der Handhabe (54) - diese Kurvenabschnitte (61, 62) entweder unmittelbar oder mittelbar, über ein Steuerglied, die Klappe entweder in ihrer Einschwenklage (20') blockieren und den Identifikationsgeber (30; 30') in der Aufnahme (12) festhalten oder die Klappe und damit den Identifikationsgeber (30; 30') freigeben.

6. Vorrichtung nach einem oder mehreren der Ansprüche 1 bis 5, **dadurch gekennzeichnet, dass** die Aufnahme (12) von einer Blende verschlossen ist und die Blende eine dem Querschnitt des Identifikationsgebers (30; 30') angepasste Öffnung (17) zum Ein- und Ausstecken (33; 33') des Identifikationsgebers (30; 30') besitzt
und dass die Blende Innenschultern (18) besitzt, welche als Endanschläge für die Ausschwenklage (20) der Klappe fungieren und/oder zur abdeckenden Anordnung des Schwenklagers (21) der Klappe (20) dienen.

7. Vorrichtung nach einem oder mehreren der Ansprüche 1 bis 6, **dadurch gekennzeichnet, dass** der als Halteelement für den Identifikationsgeber (30; 30') dienende Vorsprung (22) in radialem Abstand (26) zur Schwenkachse (21) der Klappe (20) angeordnet ist.

8. Vorrichtung nach Anspruch 7, **dadurch gekennzeichnet, dass** der Vorsprung (22) - in Ausschwenklage (20) der Klappe gesehen - sich annähernd in der Längsmitte (19) der Öffnung (17) vom Gehäuse (11) befindet.

9. Vorrichtung nach einem oder mehreren der Ansprüche 1 bis 8, **dadurch gekennzeichnet, dass** die Klappe (20) mehrere Vorsprünge (22) aufweist, denen mehrere Aussparungen (32') im Identifikationsgeber (30') zugeordnet sind.

10. Vorrichtung nach einem oder mehreren der Ansprüche 1 bis 9, **dadurch gekennzeichnet, dass** der Identifikationsgeber (30') Scheckkarten-Format aufweist.

11. Vorrichtung nach einem oder mehreren der Ansprüche 1 bis 10, **dadurch gekennzeichnet, dass** die Aufnahme (12) im Gehäuse (11) mehrere Klappen (20) aufweist, die zwar auf getrennten Schwenkachsen (21) sitzen, aber gemeinsam, von dem gleichen Identifikationsgeber (30) verschwenkbar sind
und dass wenigstens eine der Klappen (20), vorzugsweise aber alle Klappen, einen Vorsprung (22) und gegebenenfalls ein Steuerglied (25) aufweist

## Claims

1. Device (10; 10') for receiving and for retaining an identification provider (30; 30'), such as an electronic key (30), in particular for an ignition starter switch and/or a steering-column lock of a motor vehicle,
having a housing (11; 11') that is fixed in the vehicle and has at least one functional output, such as a camshaft for the ignition starter switch or an electrical line (47) to an ignition starter switch (52), and the housing has a socket (12) for the insertion of the identification provider (30; 30'),
wherein the identification provider (30; 30') has at least one lateral indentation (32; 32') for a retaining element provided in the socket (12)
and the opening (17), belonging to the socket (12), in the housing (11, 11') is sealed by a spring-loaded cover element, which, when the identification provider (30; 30') is inserted (33) is pressed back against the spring force (23),
**characterized**
**in that** the cover element is a pivotably mounted flap (20) that can be pivoted out of its outwardly pivoted position (20) sealing the opening (17) by means of the identification provider (30; 30') into an inwardly pivoted position (20') that releases the opening and is situated in the interior of the socket (12),
**in that** the flap (20) has, on its outer side, a projection (22) that fits into the lateral indentation (32) of the identification provider (30; 30') in the inwardly pivoted position (20') and acts as retaining element for the identification provider (30; 30'),
**in that** the socket (12) has a lateral indentation (40),
**in that**, during the insertion and removal (33; 33') of the identification provider (30; 30'), the flap (20) can be swivelled further back temporarily out of its inwardly pivoted position (20') into an extended pivot position (20") as a result of the projection (22) travelling up onto the contour (34) of the identification provider (30; 30'),
and **in that** a cam surface (44; 60) can be transferred between a release position (45; 61) and a blocking position (46; 62) with respect to the flap situated in the inwardly pivoted position (20'),
wherein, although the space region (42) necessary for swivelling the flap (20) further into its extended pivot position (20") is free in the release position (45; 61) of the cam surface (44; 60), it is obstructed in the blocking position (46; 62) and thereby secures the engagement of the projection (22) of the flap in the indentation (32; 32') of the identification provider (30; 30').

2. Device according to Claim 1, **characterized in that** the housing (11) comprises a rotor (15) that has both the socket (12) and the flap (20),
**in that** the rotor (15) can be rotated in a stationary housing shell (14) by the identification provider (30) from a rest position into at least one further working position,
**in that** the cam surface (44) is situated on the internal surface of the housing shell (14) and interacts with a control element (35; 25) and, with respect to the control element (35; 25), has a radial recess (45) in the region of the rest position and a radial elevation (46) in the region of the working position,
and **in that** the control element (35; 25) projects through a bore (43; 43') in the rotor (15), at which bore the flap (20) engages in the socket (12) and, depending on the rotational position of the identification provider (30), either locks the flap in its inwardly pivoted position (20') or releases it for pivoting further up to the extended pivot position (20").

3. Device according to Claim 2, **characterized in that** the control element (35) is loosely guided between axial end stops (37) in the bore (43) of the rotor (15)
and **in that** the control element (30), when its radial outer end (36) is aligned with the radial elevation (46) in the housing shell (14), it projects by means of its free radial inner end (38) into that space region (42) of the recess (40) that is needed for the extended pivot position (20") of the flap.

4. Device according to Claim 2, **characterized in that** the control element (25) is seated on the back of the flap (20) and the control element (25) forms, together with the projection (22) and the flap (20), a common mobile flap component (50),
and **in that**, in the inwardly pivoted position (50') of the component, the radial outer end (36) of the control element (25) is pivoted into a radial perforation (43') in the rotor (15) and interacts with the radial recess (45) or radial elevation (46) on the housing shell (14).

5. Device according to Claim 1, 3 or 4, **characterized in that**, although the socket (12) is stationary in the housing (11'), the cam surface comprises the cam (61, 62) of a rotationally driven eccentric (60)
**in that** the drive (58) of the eccentric (60) can be controlled by means of a further manual control (54) and transfers the eccentric (60) into at least two defined rotational positions,
**in that** the eccentric is disposed alongside that recess (40) in the housing (11') intended for the flap (20) and has both a radially projecting (62) and a radially set-back cam section (61)
and **in that**, depending on the actuation of the manual control (54), said curve sections (61, 62), either directly or indirectly via a control element, either lock the flap in its inwardly pivoted position (20') and retain the identification provider (30; 30') in the socket (12) or release the flap and, consequently, the identification provider (30; 30').

6. Device according to one or more of Claims 1 to 5, **characterized in that** the socket (12) is sealed by a shutter and the shutter has an opening (17) matched to the cross-section of the identification provider (30; 30') for inserting and removing (33; 33') the identification provider (30; 30'),
and **in that** the shutter has internal shoulders (18) that act as end stops for the outwardly pivoted position (20) of the flap and/or are used for the covering arrangement of the swivelling bearing (21) of the flap (20).

7. Device according to one or more of Claims 1 to 6, **characterized in that** the projection (22) serving as retaining element for the identification provider (30; 30') is disposed at a radial distance (26) from the pivoting spindle (21) of the flap (20).

8. Device according to Claim 7, **characterized in that** the projection (22), viewed in the outwardly pivoted position (20) of the flap, is situated approximately in the longitudinal centre (19) of the opening (17) of the housing (11).

9. Device according to one or more of Claims 1 to 8, **characterized in that** the flap (20) has a plurality of projections (22) that are assigned to a plurality of recesses (32') in the identification provider (30').

10. Device according to one or more of Claims 1 to 9, **characterized in that** the identification provider (30') has a cheque card format.

11. Device according to one or more of Claims 1 to 10, **characterized in that** the socket (12) in the housing (11) has a plurality of flaps (20) that, although they are seated on separate pivoting spindles (21), they can be pivoted jointly by the same identification provider (30)
and **in that** at least one of the flaps (20), but preferably all the flaps, have a projection (22) and optionally a control element (25).

## Revendications

1. Dispositif (10; 10') pour supporter et maintenir un transmetteur d'identification (30; 30'), tel qu'une clé électronique (30), en particulier pour un contacteur d'allumage et de démarrage et/ou un verrouillage de la colonne de direction d'un véhicule automobile,
avec un boîtier (11; 11') disposé de façon localement fixe dans le véhicule, qui présente au moins une sortie fonctionnelle, telle qu'une onde de commande pour le contacteur d'allumage et de démarrage, ou bien ligne électrique (47) allant à un contacteur d'allumage et de démarrage (52), et le boîtier comportant un logement (12) pour l'enfichage du transmetteur d'identification (30, 30'),
le transmetteur d'identification (30; 30') présentant au moins une entaille (32; 32') latérale pour un élément de maintien prévu dans le logement (12),
et l'ouverture (17) ménagée dans le boîtier (11 ; 11') et appartenant au logement (12) étant fermée au moyen d'un élément de recouvrement à montage élastique, qui, lors de l'enfichage (33) du transmetteur d'identification (30 ; 30'), est ramené par pression, à l'encontre de la force d'un ressort (23)
**caractérisé en ce que** :
l'élément de recouvrement est un volet (20) monté de façon pivotante, pouvant pivoter de sa position sortie par pivotement (20), obturant l'ouverture (17), sous l'effet du transmetteur d'identification (30 ; 30'), en une position introduite par pivotement (20') libérant l'ouverture, à l'intérieur du logement (12),
le volet (20) présente, sur son coté visible une saillie (22), qui - à la position introduite par pivotement (20') - s'adapte dans l'entaille (32) latérale du transmetteur d'identification (30; 30') et sert d'élément de maintien pour le transmetteur d'identification (30 30'),
le logement (12) présente une entaille latérale (40),
le volet (20), lors de l'insertion et de l'extraction par enfichage (33 ; 33') du transmetteur d'identification (30 ; 30'), peut être rabattu par pivotement plus fortement, par passage de la saillie (22) sur le contour (34) du transmetteur d'identification (30; 30'), de sa position introduite par pivotement (20'), temporairement à une position sur-pivotée (20"),
et **en ce qu'**une face de commande (44 ; 60') peut être commutée, quand au volet se trouvant à la position introduite par pivotement (20'), entre une position de libération (45 ; 61') et une position de blocage (46 ; 62),
la zone spatiale (42) nécessaire pour la continuation du pivotement du volet (20) à sa position sur-pivotée (20"), à la position de libération (45 ; 61) de la face de commande (44 ; 60) est certes libre, mais, à la position de blocage (46 ; 62), elle est bloquée et assure de ce fait l'engagement de la saillie (22) du volet dans l'entaille (32; 32') du transmetteur d'identification (30 ; 30')

2. Dispositif selon la revendication 1, **caractérisé en ce que** le boîtier (11) contient un rotor (15) qui présente tant le logement (12), qu'également le volet (20),
**en ce que** le rotor (15) est susceptible de tourner dans une enveloppe de boîtier (14) stationnaire, sous l'effet du transmetteur d'identification (30), d'une position de repos en au moins une autre position de travail
**en ce que** la face de commande (44) se trouve sur la face intérieure de l'enveloppe de boîtier (14) et coopère avec un organe de commande (35; 25) et - par rapport à l'organe de commande (35; 25) - présente dans la zone de la position de repos une cavité radiale (45) et dans la zone de position de travail un bossage radial (46),
et **en ce que** l'organe de commande (35; 25) traverse un perçage (43; 43') ménagé dans le rotor (15), perçage sur lequel agit le volet (20) se trouvant dans le logement (12) et le volet (20) - en fonction de la position en rotation du transmetteur d'identification (30) - soit bloque le volet à sa position introduite par pivotement (20'), soit libère la continuation de son pivotement jusqu'à atteindre une position sur-pivotée (20').

3. Dispositif selon la revendication 2, **caractérisé en ce que** l'organe de commande (35) est guidé de façon lâche dans le perçage (43) du rotor (15), entre des butées de fin de course axiales (37),
et **en ce que** l'organe de commande (30) - lorsque l'on a alignement de son extrémité extérieure radiale (36) avec le bossage radial (46) dans l'enveloppe de boîtier (14) pénètre, par son extrémité intérieure radiale (38) libre, dans la zone spatiale (42) de l'évidement (40) qui est nécessaire pour atteindre la position sur-pivotée (20") du volet.

4. Dispositif selon la revendication 2, **caractérisé en ce que** l'organe de commande (25) repose sur la face arrière du volet (20), et l'organe de commande (25), conjointement avec la saillie (22) et le volet (20), forme un ensemble de construction (50) commun, à mobilité en basculement,
et **en ce que** - lorsque l'ensemble de construction est en position introduite par pivotement (50') - l'extrémité extérieure radiale (36) de la gamme de commande (25) s'introduit par pivotement dans un passage radial (43') du rotor (15) et coopère avec la cavité radiale (45) ou le bossage radial (46) réalisé sur l'enveloppe de boîtier (14).

5. Dispositif selon la revendication 1, 3 ou 4, **caractérisé en ce que** le logement (12) ménagé dans le boîtier (11') est certes stationnaire, mais la face de commande est formée de la came de commande (61, 62) d'un excentrique (60) qui est entraîné en rotation,
**en ce que** l'entraînement (58) de l'excentrique (60) est susceptible d'être commandé à l'aide d'une autre manette (54) et fait passer l'excentrique (60) en au moins deux positions en rotation définies,
**en ce que** l'excentrique est disposé dans le boîtier (11'), à côté de l'évidement (40) conçu pour le volet (20), et présente tant un tronçon de came en saillie radialement (62) qu'également en retrait radialement (61),
et **en ce que** - en fonction de l'actionnement de la manette (54) - ces tronçons de came (61, 62) bloquent le volet, soit directement, soit indirectement, par l'intermédiaire d'un organe de commande, à sa position introduite par pivotement (20') et fixent le transmetteur d'identification (30; 30') dans le logement (12), ou libèrent le volet et, ainsi, le transmetteur d'identification (30; 30').

6. Dispositif selon l'une ou plusieurs des revendications 1 à 5, **caractérisé en ce que** le logement (12) est fermé par un écran et l'écran a une ouverture (17), adaptée à la section transversale du transmetteur d'identification (30; 30'), pour l'insertion et la sortie par enfichage (33; 33') du transmetteur d'identification (30; 30')
et **en ce que** l'écran a des épaulements intérieurs (18) qui servent de butées de fin de course à la position sortie par pivotement (20) du volet et/ou à l'agencement en recouvrement du palier de pivotement (21) du volet (20).

7. Dispositif selon l'une ou plusieurs des revendications 1 à 6, **caractérisé en ce que** la saillie (22), servant d'élément de maintien au transmetteur d'identification (30; 30'), est disposée à distance radiale (26) de l'axe de pivotement (21) du volet (20).

8. Dispositif selon la revendication 7, **caractérisé en ce que** la saillie (22) - en observant le volet à la position sortie par pivotement (20) - se trouve à peu près dans l'axe longitudinal (19) de l'ouverture (17) du boîtier (11).

9. Dispositif selon l'une ou plusieurs des revendication(s) 1 à 8, **caractérisé en ce que** le volet (20) présente plusieurs saillies (22) auxquelles sont associés plusieurs évidement (32') dans le transmetteur d'identification (30').

10. Dispositif selon l'une ou plusieurs des revendication(s) 1 à 9, **caractérisé en ce que** le transmetteur d'identification (30') présente un format de carte de crédit.

11. Dispositif selon l'une ou plusieurs des revendication(s) 1 à 10, **caractérisé en ce que** le logement (12) ménagé dans le boîtier (11) présente plusieurs volets (20) qui, certes, sont montés sur des axes de pivotement (21) séparés, mais qui peuvent pivoter conjointement sous l'effet du même transmetteur d'identification (30),
et **en ce qu'**au moins l'un des volets (20), de préférence cependant tous les volets, présente(ent) une saillie (22) et le cas échéant un organe de commande (25).
